# EUROPÄISCHE PATENTSCHRIFT

(11) **EP 1 481 487 B1**
(45) Veröffentlichungstag und Bekanntmachung des Hinweises auf die Patenterteilung: **20.01.2010**
(21) Anmeldenummer: 03709634.4
(22) Anmeldetag: 20.02.2003
(51) Int. Cl.: H04B 1/40, H04B 1/04

(54) **SENDEANORDNUNG**
TRANSMISSION SYSTEM
DISPOSITIF D'EMISSION

(30) Priorität: 04.03.2002 DE 10209516
(43) Veröffentlichungstag der Anmeldung: 01.12.2004
(73) Patentinhaber: Infineon Technologies AG, 85579 Neubiberg (DE)
(72) Erfinder: SIMON, Martin, 83624 Otterfing (DE)
(74) Vertreter: Viering, Jentschura & Partner
(86) Internationale Anmeldenummer: PCT/DE2003/000537
(87) Internationale Veröffentlichungsnummer: WO 2003/075476

(56) Entgegenhaltungen:
- WO-A-98/17012
- US-B1- 6 208 875

## Beschreibung

Die vorliegende Erfindung betrifft eine Sendeanordnung.

Gemäß dem weitverbreiteten Mobilfunkstandard GSM (Global System for Mobile Communication) wird zur Aufbereitung digitaler, zu sendender Daten eine Phasen- und Frequenzmodulation eingesetzt. Für die digitale Modulation der zu sendenden Daten wird dabei normalerweise das Gauss'sche Minimum Shift Keying (GMSK) verwendet, bei dem in der Signalamplitude des über einen Kanal zu übertragenden Funksignals keine Nutzsignalinformationen codiert sind, sondern lediglich in Phase beziehungsweise Frequenz.

Der Wunsch nach höheren Übertragungsraten im Mobilfunk führte zur Einführung von Modulationsverfahren für höhere Datenraten, wie sie beispielsweise in der Erweiterung des GSM-Standards, dem sogenannten GSM EDGE-System, Einzug hielten. Dabei wird die Signalinformation durch eine Kombination aus Phasen- und Amplitudenumtastung dargestellt. Die Abkürzung EDGE steht dabei für Enhanced Data Rates for GSM Evolution. EDGE erlaubt zu UMTS (Universal Mobile Telecommunications System) vergleichbare Übertragungsraten.

In GSM-Systemen, die mit GMSK-Modulationsverfahren arbeiten, werden als Sende-Architekturen normalerweise solche mit Phasenregelschleifen angewendet, in denen ein mit dem Modulationssignal angesteuerter VCO (voltage Controlled Oscillator) verwendet wird, oder es werden Phasenregelschleifen mit Delta-Sigma-Modulator eingesetzt. Derartige Sendeanordnungen haben bei geringer Stromaufnahme ein gutes Rauschverhalten und benötigen keine zusätzlichen Oberflächenwellenfilter an ihrem Ausgang.

Alternativ können auch Sendearchitekturen mit Quadraturmodulator verwendet werden. Dabei kann der Quadraturmodulator beispielsweise als Vektormodulator ausgebildet sein und von einem komplexwertigen Basisband-Signal angesteuert sein. Dabei ist normalerweise eine Direktumsetzung in den Sendefrequenzbereich vorgesehen. Derartige Quadraturmodulatoren haben jedoch den Nachteil, daß die Stromaufnahme verhältnismäßig groß ist, um vertretbare Rauscheigenschaften zu erzielen. Weiterhin ist ausgangsseitig ein externes Oberflächenwellenfilter zur Bandpaßfilterung nötig.

Während der zuletzt beschriebene Quadraturmodulator zur Verarbeitung von phasen- und amplitudenmodulierten Signalen, wie sie bei GSM EDGE vorkommen, geeignet ist, können mit den stromsparenderen Architekturen, bei denen ein VCO mit hochfrequentem, bereits moduliertem Signal angesteuert wird, keine Amplitudeninformationen verarbeitet werden.

WO 9817012 offenbart eine derartige Sendeanordnung des Standes der Technik.

Aufgabe der vorliegenden Erfindung ist es, eine Sendeanordnung anzugeben, welche sowohl für phasen- und frequenzmodulierte, nicht amplitudenmodulierte Signale, als auch für phasen- und amplitudenmodulierte Signale geeignet ist und dabei in den jeweiligen Betriebsarten eine verhältnismäßig geringe Stromaufnahme aufweist.

Erfindungsgemäß wird die Aufgabe gelöst durch eine Sendeanordnung, umfassend
- eine Basisband-Signalverarbeitungseinheit, die an ihrem Ausgang ein Modulationssignal bereitstellt,
- einen Frequenzmischer, ausgelegt zum Betrieb in zwei Betriebsarten,
- einen Frequenzgenerator, der mit einem ersten Eingang des Frequenzmischers zu dessen Ansteuerung gekoppelt ist,
- einen ersten Sendesignalpfad, der den Ausgang der Basisband-Signalverarbeitungseinheit mit einem zweiten Eingang des Frequenzmischers koppelt, wobei der Frequenzmischer in der ersten Betriebsart als Aufwärts-Frequenzmischer arbeitet, und
- einen zweiten Sendesignalpfad, der den Ausgang der Basisband-Signalverarbeitungseinheit mit dem Frequenzgenerator koppelt, wobei der Frequenzmischer in der zweiten Betriebsart als Verstärker arbeitet.

Gemäß vorliegendem Prinzip werden zwei Sendearchitekturen vorteilhaft miteinander kombiniert. Mittels des ersten Signalpfades und des Frequenzmischers ist in der ersten Betriebsart die Verarbeitung von phasen- und amplitudenmodulierten Signalen möglich. In dieser Betriebsart, beispielsweise in einer 8-PSK-Modulation, arbeitet der Frequenzmischer als Aufwärts-Frequenzumsetzer. Dabei ist kein Oberflächenwellenfilter erforderlich, weil die Rauschanforderungen wegen der geringen Ausgangsleistung verhältnismäßig gering sind.

Mittels des zweiten Sendesignalpfades wird der Frequenzgenerator mit einem moduliertem Signal angesteuert. In der zweiten Betriebsart arbeitet der Frequenzmischer lediglich als Verstärker.

In der ersten Betriebsart stellt der Frequenzgenerator bevorzugt ein Signal mit einer Trägerfrequenz bereit, wobei in dieser Betriebsart der Frequenzmischer das vom Frequenzgenerator bereitgestellte oder ein davon durch Frequenzteilung oder Frequenzmultiplikation abgeleitetes Signal verwendet, um das Modulationssignal in eine hochfrequente Lage zu konvertieren.

Die Ausgangsstufe der Sendeanordnung, also der Frequenzmischer, wird demnach mit Vorteil in beiden Betriebsarten der Sendeanordnung benutzt.

Insgesamt bietet die Sendeanordnung gemäß dem vorgestellten Prinzip die Möglichkeit, sowohl herkömmliche, mit einer GMSK-Modulation arbeitende GSM-Systeme, als auch erweiterte Systeme gemäß GSM EDGE für höhere Datenraten zu unterstützen.

Dabei werden die jeweils geltenden Rauschanforderungen bei jeweils verhältnismäßig geringer Stromaufnahme erreicht. In keiner der beiden Betriebsarten ist am Ausgang des Frequenzmischers ein zusätzliches Oberflächenwellenfilter, auch SAW(Surface Acoustic Wave)-Filter genannt, erforderlich.

Da gemäß dem vorgestellten Prinzip zahlreiche Funktionseinheiten der Sendeanordnung in beiden Betriebsarten benutzt werden können, ist die vorgestellte Sendeanordnung mit verhältnismäßig geringem Flächenbedarf als integrierte Schaltungen realisierbar.

Die vorgestellte Sendeanordnung kann sowohl analog als auch digital vorliegende Modulationssignale verarbeiten, wobei das Modulationssignal in der zweiten Betriebsart bevorzugt digital kodiert und in der ersten Betriebsart bevorzugt analog kodiert und zur Zuführung an Frequenzmischereingänge geeignet vorliegt.

Gemäß einer bevorzugten Weiterbildung der vorliegenden Erfindung ist der Frequenzgenerator in einer Phasenregelschleife angeordnet, die einen Steuereingang aufweist, der mit dem Ausgang der Basisband-Signalverarbeitungseinheit gekoppelt ist.

Die Phasenregelschleife umfaßt bevorzugt einen gesteuerten Oszillator, einen Phasendetektor, der den Oszillator ansteuert, ein Schleifenfilter zur Kopplung des Phasendetektors und des Oszillators sowie einen Rückkopplungspfad, der den Ausgang des Oszillators mit einem Eingang des Phasendetektors koppelt. Ein weiterer Eingang des Phasendetektors ist bevorzugt an eine Bezugsfrequenzquelle angeschlossen.

Im Rückkopplungspfad der Phasenregelschleife ist bevorzugt ein Modulator angeordnet, der einen Steuereingang aufweist, der mit dem Ausgang der Basisband-Signalverarbeitungseinheit zur Übermittlung des bevorzugt digital codierten Modulationssignals verbunden ist. Somit wird der gesteuerte Oszillator mit einem Steuersignal angesteuert, welches von der Ausgangsfrequenz des Oszillators und dem Modulationssignal abhängt.

Der Modulator im Rückkoppelungspfad ist bevorzugt als Fractional N-Teiler ausgebildet und ermöglicht eine GSMK-Modulation mit geringem Strombedarf und guten Rauscheigenschaften. Der Modulator ist bevorzugt als Delta-Sigma-Modulator ausgebildet, dessen Steuereingang unmittelbar mit der Basisband-Signalverarbeitungseinheit gekoppelt werden kann, beispielsweise mit einem digitalen Signalprozessor.

Zur Verarbeitung komplexwertig vorliegender Modulationssignale ist der Frequenzmischer bevorzugt als Quadraturmodulator, beispielsweise als Vektormodulator ausgebildet. Dabei umfaßt der Frequenzmischer einen ersten und einen zweiten Mischer, welche von je einer Signalkomponente des komplexwertigen Modulationssignals angesteuert werden. Dabei sind die ersten Eingänge der Frequenzmischer mit dem Frequenzgenerator an dessen Ausgang gekoppelt, während die zweiten Eingänge der Frequenzmischer mit der Basisband-Signalverarbeitungseinheit gekoppelt sind. Dabei ist bevorzugt ein Inphase-Signalzweig vorgesehen und ein Quadratur-Signalzweig.

Inphase- und Quadratur-Signalzweig im ersten Signalpfad weisen bevorzugt je einen Digital-Analog-Wandler auf, mit je einem Eingang, der mit der Basisband-Signalverarbeitungseinheit verbunden ist und mit je einem Ausgang, der mit je einem zugeordneten Frequenzmischer gekoppelt ist.

Der Frequenzmischer weist bevorzugt einen Steuereingang zum Umschalten zwischen erster und zweiter Betriebsart auf. Dabei kann die Mischerfunktion des Frequenzmischers in der zweiten Betriebsart abgeschalten werden, so daß der Frequenzmischer in der ersten Betriebsart lediglich als Verstärker oder Pufferverstärker arbeitet.

Der Frequenzmischer umfaßt bevorzugt vier Differenzverstärker, von denen je zwei dem ersten und je zwei dem zweiten Frequenzmischer zugeordnet sind, welche je einen Speisestrompfad zur Stromversorgung der Differenzverstärker aufweisen. Dabei ist während der zweiten Betriebsart bevorzugt eine Speisestromunterbrechung von drei der vier Differenzverstärker vorgesehen. Die Differenzverstärker haben dabei Steuereingänge, die bevorzugt an den Frequenzgenerator, gegebenenfalls über einen Frequenzteiler, angeschlossen sind. Die Speisestrompfade der Differenzverstärker sind in der ersten Betriebsart bevorzugt mit der Basisband-Signalverarbeitungseinheit zur Zuführung modulierter Speiseströme gekoppelt.

Weitere Einzelheiten und vorteilhafte Ausgestaltungen der Erfindung sind Gegenstand der Unteransprüche.

Die Erfindung wird nachfolgend an einem Ausführungsbeispiel anhand von Zeichnungen näher erläutert.

Es zeigen:
- Figur 1: ein erstes Ausführungsbeispiel des vorliegenden Prinzips anhand eines vereinfachten Blockschaltbildes und
- Figur 2: ein Ausführungsbeispiel des Frequenzmischers gemäß Figur 1 anhand eines Schaltplanes.

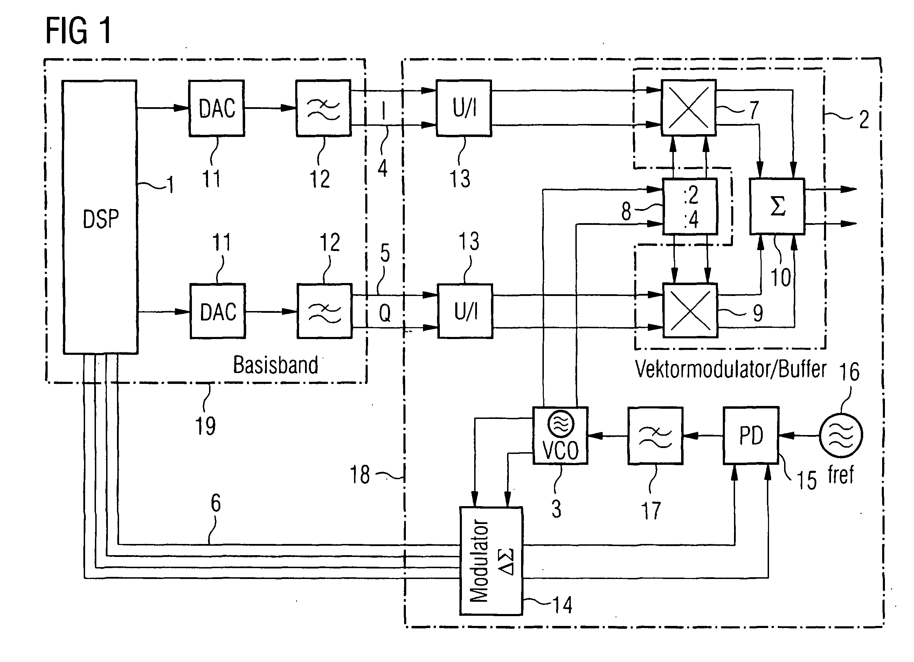

Figur 1 zeigt eine Sendeanordnung, umfassend eine Basisband-Signalverarbeitungseinheit 1, einen daran angekoppelten Frequenzmischer 2 und einen Frequenzgenerator 3. Ein erster Signalpfad 4, 5 koppelt einen Ausgang der Basisband-Signalverarbeitungseinheit 1, an dem diese ein Modulationssignal bereitstellt, mit einem zweiten Eingang des Frequenzmischers 2, dessen erster Eingang mit dem Frequenzgenerator 3 gekoppelt ist. Ein zweiter Sendesignalpfad 6 koppelt den Ausgang der Basisband-Signalverarbeitungseinheit 1 mit einer Phasenregelschleife 3, 14, 15, 17, welche den Frequenzgenerator 3 umfaßt.

Der Frequenzmischer 2, der als Vektormodulator ausgebildet ist, umfaßt einen ersten Frequenzmischer 7, der zur symmetrischen Signalverarbeitung ausgelegt ist, mit einem ersten Eingang, der mit einem Frequenzteiler 8 gekoppelt ist und mit einem zweiten Eingang, der mit einem Inphase-Zweig 4 des ersten Signalpfads 4, 5 gekoppelt ist. Weiterhin umfaßt der Frequenzmischer 2 einen zweiten Frequenzmischer 9, mit einem ersten Eingang, der ebenfalls mit einem Ausgang des Frequenzteilers 8 verbunden ist und mit einem zweiten Eingang, der mit dem einem Quadratur-Zweig 5 des ersten Signalpfads 4, 5 verbunden ist. Der zweite Frequenzmischer 9 ist ebenfalls symmetrisch ausgelegt zur Verarbeitung differentieller Signale.

Erster und zweiter Frequenzmischer 7, 9 weisen je einen Ausgang auf, der mit je einem Eingang eines Verknüpfungsgliedes 10 verbunden ist. Der Ausgang des Verknüpfungsgliedes 10 bildet den Ausgang der Sendeanordnung. Erster und zweiter Signalpfad 4, 5 umfassen je einen Digital-/Analog-Wandler 11 mit nachgeschaltetem Tiefpaßfilter 12, welche an den Ausgang der Basisband-Signalverarbeitungseinheit 1 angeschlossen sind. Diese, sowie die Wandler 11 und die Tiefpaßfilter 12, sind gemeinsam in einem Basisbandblock 19 angeordnet, welcher als integrierte Schaltung vorgesehen ist. An die Ausgänge der Tiefpaßfilter 12 ist je ein Spannungs-/Strom-Wandler 13 angeschlossen. Die Ausgänge der Spannungs-/Strom-Wandler 13 sind je mit einem zweiten Eingang der Frequenzmischer 7, 9 in differentieller Schaltungstechnik verbunden. Der Eingang des Frequenzteilers 8, der ein zwischen dem Faktor zwei und dem Faktor vier umschaltbares Teilerverhältnis aufweist, ist mit dem Ausgang eines spannungsgesteuerten Oszillators 3 verbunden. Ein weiterer Ausgang des spannungsgesteuerten Oszillators 3 ist mit einem Delta-Sigma-Modulator 14 verbunden, der als Fractional N-Teiler ausgebildet ist. Der Delta-Sigma-Modulator 14 weist einen Steuereingang auf, der mittels des zweiten Signalpfades 6 mit einem Ausgang der Basisband-Signalverarbeitungseinheit 1 verbunden ist. Zur Bildung einer Phasenregelschleife ist ein Phasendetektor 15 vorgesehen, mit einem ersten Eingang, der mit dem Ausgang des Delta-Sigma-Modulators 14 verbunden ist und einem zweiten Eingang, der mit einem Bezugsfrequenzgenerator 16 verbunden ist. Der Ausgang des Phasendetektors 15 ist über ein Tiefpaßfilter 17, welches als Schleifenfilter ausgelegt ist, mit dem Spannungssteuereingang des Oszillators 3 verbunden. Demnach bilden die Blöcke 3, 14, 15 und 17 die Phasenregelschleife. Diese Phasenregelschleife 3, 14, 15, 17 sowie der Frequenzmischer 2 und die Spannungs-Strom-Wandler 13 sind gemeinsam in einer weiteren, integrierten Schaltung gebildet, welche als HF-Block ausgebildet und mit Bezugszeichen 18 versehen ist.

Der Frequenzmischer 2 arbeitet in einer ersten Betriebsart als Aufwärts-Frequenzmischer und in einer zweiten Betriebsart als Verstärker.

In der ersten Betriebsart wird ein als komplexwertiges Signal I, Q vorliegendes Modulationssignal, welches vom digitalen Signalprozessor 1 bereitgestellt wird, in ein entsprechendes analoges Signal umgewandelt, tiefpaßgefiltert und von einem Spannungs- in ein Stromsignal konvertiert. Das derart aufbereitete Modulationssignal wird in der ersten Betriebsart im Frequenzmischer 2 in einer Direktumsetzung auf die gewünschte, hochfrequente Sendelage hochgesetzt. Hierfür stellt der Frequenzgenerator 3 in der ersten Betriebsart eine Trägerfrequenz bereit, welche im Frequenzteiler 8 je nach gewünschtem Sendeband, durch zwei oder durch vier geteilt und dem Quadraturmodulator 7, 9 zugeführt wird. Da vorliegende Sendeanordnung gemäß Figur 1 für den Mobilfunkstandard GSM ausgelegt ist, arbeitet der VCO 3 in der ersten Betriebsart bei 3,6 GHz, so daß mittels des Frequenzteilers sowohl GSM 900, als auch GSM 1800 unterstützt wird.

Der Frequenzmischer 2 arbeitet im vorliegenden Ausführungsbeispiel in der ersten Betriebsart demnach als Vektormodulator. Mit der in der ersten Betriebsart vorgesehenen Sendearchitektur können Modulationssignale verarbeitet werden, welche eine Amplitudenmodulationskomponente haben, wie es beim erweiterten Standard GSM EDGE vorgesehen ist. Um die dort geltenden Rauschanforderungen zu erfüllen, ist am Ausgang des Frequenzmischers 2 aufgrund der geringen Ausgangsleistung kein Oberflächenwellenfilter notwendig.

In der zweiten Betriebsart der Sendeanordnung stellen die Spannungs-/Stromwandler 13 an den zweiten Eingängen der Frequenzmischer 7, 9 lediglich ein Gleichstromsignal bereit. Die Frequenzmischer 7, 9 arbeiten in dieser Betriebsart als Verstärker ohne Frequenzumsetzung. Die eigentliche Modulation erfolgt in der zweiten Betriebsart vielmehr in der Phasenregelschleife 3, 14, 15, 17. Dem Delta-Sigma-Modulator 14 wird an seinem Eingang über den zweiten Signalpfad 6 das Modulationssignal zugeführt. In Abhängigkeit vom Modulationssignal wird das vom Oszillator 3 an seinem Ausgang bereitgestellte Signal moduliert bzw. heruntergeteilt. Das derart modulierte Rückkopplungssignal wird im Phasendetektor 15 mit einem Bezugssignal verglichen und in Abhängigkeit von dieser Phasen- und/oder Frequenzabweichung wird über ein Schleifenfilter 17 der spannungsgesteuerte Oszillator 3 angesteuert. Am Ausgang des Oszillators 3 steht in der zweiten Betriebsart demnach bereits ein hochfrequentes, moduliertes Signal in einem Frequenzband von 3,6 GHz bereit, welches je nach gewünschtem GSM-Sendeband entweder durch zwei oder durch vier auf Frequenzbänder von 1800 oder 900 MHz im Frequenzteiler 8 heruntergeteilt wird. In der zweiten Betriebsart können lediglich Phasen- und Frequenzinformationen des Modulationssignals verarbeitet werden, Amplitudeninformationen hingegen nicht. In der zweiten Betriebsart arbeitet die Sendeanordnung als Sender mit moduliertem VCO und ist daher ohnehin besonders rauscharm bei geringer Stromaufnahme. Auch in dieser Betriebsart ist am Ausgang des Frequenzmischers 2 mit Vorteil kein Oberflächenwellenfilter nötig.

Die beschriebene Sendeanordnung ist insgesamt sowohl für herkömmliche GMSK-Modulation, als auch für das erweiterte GSM EDGE geeignet, welches hohe Datenübertragungsraten, ähnlich wie beim UMTS-Standard, ermöglicht. Die beschriebene Sendeanordnung kommt in beiden beschriebenen Betriebsarten ohne teueres Oberflächenwellenfilter am Ausgang aus und ist daher und aufgrund der beschriebenen stromsparenden Eigenschaften für die Massenherstellung und den Einsatz in Mobilfunkgeräten besonders gut geeignet.

Schließlich unterstützt die beschriebene Sendeanordnung in beiden Betriebsarten sogenanntes Dual-Band, das heißt, sie kann sowohl bei 900, als auch bei 1800 MHz arbeiten.

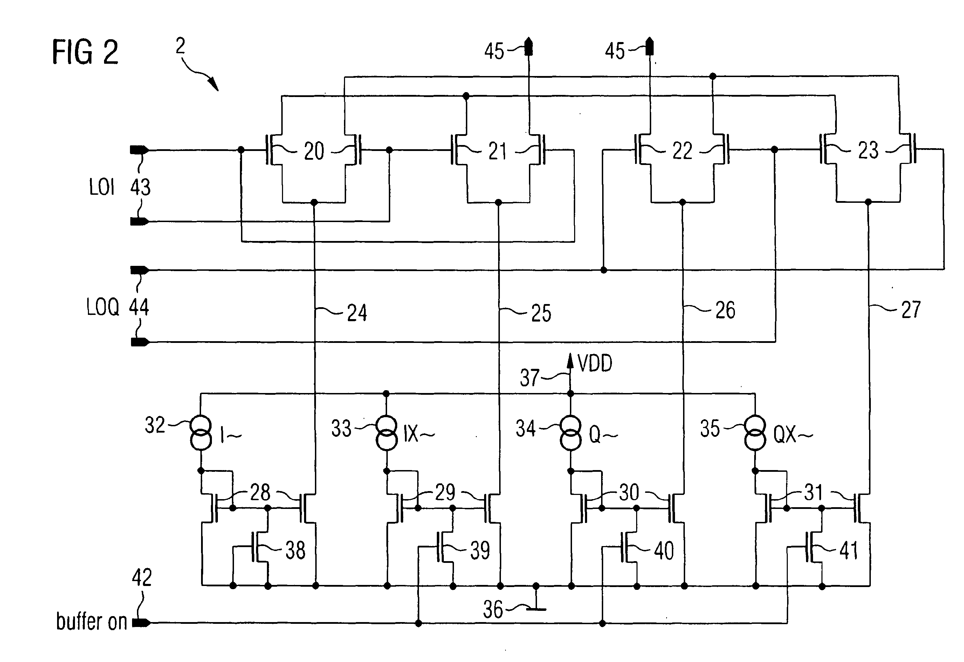

Figur 2 zeigt anhand eines Schältplanes ein Ausführungsbeispiel des Frequenzmischers 2 von Figur 1, der in der ersten Betriebsart als Aufwärts-Frequenzumsetzer und in der zweiten Betriebsart als Pufferverstärker arbeitet.

Der Hochfrequenzmischer 2 ist vollständig in Complementary Metal Oxide Semiconductor(CMOS)-Schaltungstechnik aufgebaut. Er umfaßt vier Differenzverstärker 20, 21, 22, 23, welche je zwei MOS-Transistoren umfassen. Diese sind jeweils paarweise Source-seitig miteinander und mit einem Speisestrompfad 24, 25, 26, 27 verbunden. Die Speisestrompfade 24 bis 27 sind über je einen Stromspiegel 28, 29, 30, 31 an eine gesteuerte Stromquelle 32, 33, 34, 35 angeschlossen. Weiterhin sind die Stromspiegel 28 bis 31 mit einem Bezugspotentialanschluß 36 verbunden. Die gesteuerten Stromquellen 32 bis 35 sind mit einem Versorgungspotentialanschluß 37 verbunden. Die Stromspiegel 28 bis 31 umfassen je zwei MOS-Transistoren, von denen je ein erster als Diode verschaltet ist. Weiterhin umfaßt jeder Stromspiegel 28 bis 31 einen weiteren MOS-Transistor, der mit seiner gesteuerten Strecke einerseits mit den Gate-Anschlüssen der jeweiligen Stromspiegel-Transistoren und mit seinem weiteren Lastanschluß mit dem Bezugspotentialanschluß 36 verbunden ist. Während der weitere Transistor 38 des Stromspiegels 28 als Diode verschaltet ist, sind die weiteren Transistoren der Stromspiegel 29 bis 31, welche mit den Bezugszeichen 39 bis 41 versehen sind, als Schalttransistoren ausgebildet, deren Steuereingänge miteinander und mit einem Steuereingang 42 des Frequenzmischers 2 verbunden sind. Die Steueranschlüsse der als Mischerzellen arbeitenden Differenzverstärker 20 bis 23 sind jeweils paarweise mit symmetrischen Schaltungseingängen des Frequenzmischers 2 verbunden, denen die Inphase-Komponente sowie die Quadratur-Komponente eines Lokaloszillatorsignals zuführbar ist und die beispielsweise über einen Frequenzteiler an einen Frequenzgenerator angeschlossen sein können. Dabei repräsentieren die Differenzverstärker 20, 21 den ersten Frequenzmischer 7 und die Differenzverstärker 22, 23 den symmetrisch ausgebildeten zweiten Frequenzmischer 9 von Figur 1. Die paarweise mit den Gate-Anschlüssen der Differenzverstärkertransistoren 20 bis 23 verbundenen Eingänge sind mit den Bezugszeichen 43, 44 versehen. Die Eingänge 43, 44 sind bei der Darstellung gemäß Figur 1 mit dem Frequenzteiler 8 verbunden. Die zweiten Eingänge der Frequenzmischer 7, 9 sind die Steuereingänge der gesteuerten Stromquellen 32 bis 35. Dabei bilden die Stromquellen 32, 33 den symmetrischen Eingang des ersten Frequenzmischers 7 und die Steuereingänge der gesteuerten Stromquellen 34, 35 den Quadratureingang des Frequenzmischers 2, d. h. den zweiten Eingang des Frequenzmischers 7. Diejenigen Anschlüsse der gesteuerten Laststrecken der Transistoren der Differenzverstärker 20 bis 23, die nicht mit den Speisestrompfaden 24 bis 27 verbunden sind, sind zur Bildung von Mischerzellen jeweils paarweise miteinander kreuzgekoppelt, wobei die Inphase-Mischerzellen 20, 21 und die Quadratur-Mischerzellen 22, 23 miteinander parallel geschaltet sind, und bilden gemeinsam den symmetrischen Ausgang 45 des Frequenzmischers 2.

In der ersten Betriebsart sind die Schalter 39 bis 41 der Stromspiegel 29 bis 31 geöffnet, so daß die Differenzverstärker 20 bis 23 von den jeweils zugeordneten gesteuerten Stromquellen 32 bis 35 gespeist werden können. In dieser Betriebsart arbeitet der Frequenzmischer 2 demnach als Quadratur-Modulator, der die an den ersten Eingängen anliegenden Quadraturkomponenten eines komplexwertigen Trägersignals mit den an den zweiten Eingängen 43, 44 anliegenden Modulationsdaten, welche ebenfalls als komplexwertiges Signal vorliegen, mischt und damit das Modulationssignal aus dem Basisband in eine hochfrequente Lage konvertiert.

In der zweiten Betriebsart, welche durch Anlegen eines High-Pegels an den Steuereingang 42 des Frequenzmischers 2 aktiviert wird, werden die Transistorschalter 39 bis 41 geschlossen, so daß in die Mischerzellen 20 bis 23 Gleichströme, keine gesteuerten Ströme eingeprägt werden und die nicht benötigten Teile der Mischerzellen durch MOS-Schalter 39 bis 41 abgetrennt werden. Somit arbeitet der Frequenzmischer 2 in der zweiten Betriebsart als begrenzender Verstärker (Limiter). Die Zweige 25 bis 27 werden demnach in der zweiten Betriebsart abgeschaltet, während der Stromzweig 24 den Differenzverstärker 20 als Pufferverstärker ansteuert. Die Stromquelle 32 arbeitet in der zweiten Betriebsart demnach nicht als gesteuerte Stromquelle, sondern als Konstantstromquelle.

Aufgrund der Benutzung von Frequenzgenerator 3, Frequenzmischer 2 und Basisband-Signalverarbeitungseinheit 1 in beiden Betriebsarten der Sendeanordnung ist diese mit geringem Flächenbedarf und geringem Aufwand herstellbar.

Anstelle der Ausführung in CMOS-Schaltungstechnik kann der in zwei unterschiedlichen Betriebsarten verwendbare Frequenzmischer 2 auch in bipolarer oder in BICMOS-Schaltungstechnik im Rahmen des vorliegenden Prinzips realisiert sein.

### Bezugszeichenliste

- 1: Basisband-Signalverarbeitungseinheit
- 2: Frequenzmischer
- 3: Frequenzgenerator, VCO
- 4: Inphase-Signalzweig
- 5: Quadratur-Signalzweig
- 6: zweiter Signalpfad
- 7: erster Frequenzmischer
- 8: Frequenzteiler
- 9: zweiter Frequenzmischer
- 10: Verknüpfungsglied
- 11: D/A-Wandler
- 12: Tiefpaß
- 13: Spannungs-/Strom-Konverter
- 14: Delta-Sigma-Modulator
- 15: Phasendetektor
- 16: Bezugsfrequenzquelle
- 17: Schleifenfilter
- 18: HF-Block
- 19: Basisband-Block
- 20: Differenzverstärker
- 21: Differenzverstärker
- 22: Differenzverstärker
- 23: Differenzverstärker
- 24: Speisestrompfad
- 25: Speisestrompfad
- 26: Speisestrompfad
- 27: Speisestrompfad
- 28: Stromspiegel
- 29: Stromspiegel
- 30: Stromspiegel
- 31: Stromspiegel
- 32: gesteuerte Stromquelle
- 33: gesteuerte Stromquelle
- 34: gesteuerte Stromquelle
- 35: gesteuerte Stromquelle
- 36: Bezugspotentialanschluß
- 37: Versorgungspotentialanschluß
- 38: Diode
- 39: Schalter
- 40: Schalter
- 41: Schalter
- 42: Steuereingang
- 43: erster Eingang
- 44: erster Eingang
- 45: Ausgang

## Patentansprüche

1. Sendeanordnung, umfassend
- eine Basisband-Signalverarbeitungseinheit (1), die an ihrem Ausgang ein Modulationssignal bereitstellt,
- einen Frequenzmischer (2), ausgelegt zum Betrieb in zwei Betriebsarten,
- einen Frequenzgenerator (3), der mit einem ersten Eingang des Frequenzmischers (2) zu dessen Ansteuerung gekoppelt ist,
- einen ersten Sendesignalpfad (4, 5), der den Ausgang der Basisband-Signalverarbeitungseinheit (1) mit einem zweiten Eingang des Frequenzmischers (2) koppelt, wobei der Frequenzmischer (2) in der ersten Betriebsart als Aufwärts-Frequenzumsetzer arbeitet, und
- einen zweiten Sendesignalpfad (6), der den Ausgang der Basisband-Signalverarbeitungseinheit (1) mit dem Frequenzgenerator (3) koppelt, wobei der Frequenzmischer (2) in der zweiten Betriebsart als Verstärker arbeitet.

2. Sendeanordnung nach Anspruch 1,
**dadurch gekennzeichnet, daß**
der Frequenzgenerator (3) in einer Phasenregelschleife (3, 14, 15, 17) angeordnet ist, die einen Steuereingang aufweist, der mit dem Ausgang der Basisband-Signalverarbeitungseinheit (1) gekoppelt ist.

3. Sendeanordnung nach Anspruch 2,
**dadurch gekennzeichnet, daß**
in einem Rückkopplungspfad der Phasenregelschleife (3, 14, 15, 17) ein Modulator (14) angeordnet ist, der den Steuereingang der Phasenregelschleife aufweist, zum Modulieren des rückkoppelnden Ausgangssignals des Frequenzgenerators (3) mit dem Modulationssignal.

4. Sendeanordnung nach Anspruch 3,
**dadurch gekennzeichnet, daß**
der Modulator (14) als Delta-Sigma-Modualtor ausgebildet ist.

5. Sendeanordnung nach einem der Ansprüche 1 bis 4,
**dadurch gekennzeichnet, daß**
der Frequenzmischer (2) als Quadraturmodulator ausgebildet ist, umfassend einen ersten Frequenzmischer (7) und einen zweiten Frequenzmischer (9) mit je einem ersten und einem zweiten Eingang, wobei die ersten Eingänge der Frequenzmischer (7, 9) mit dem Frequenzgenerator (3) und die zweiten Eingänge der Frequenzmischer (7, 9) mit der Basisband-Signalverarbeitungseinheit (1) gekoppelt sind, zur Verarbeitung des als komplexwertiges Signal (I, Q) vorliegenden Modulationssignals.

6. Sendeanordnung nach Anspruch 5,
**dadurch gekennzeichnet, daß**
zur Kopplung des Frequenzgenerators (3) mit den ersten Eingängen der beiden Frequenzmischer (7, 9) ein Frequenzteiler (8) vorgesehen ist.

7. Sendeanordnung nach Anspruch 5 oder 6,
**dadurch gekennzeichnet, daß**
im ersten Signalpfad (4, 5) zur Verarbeitung des komplexwertigen Modulationssignals (I, Q) je ein Digital-/Analog-Wandler (11) vorgesehen ist, mit je einem Ausgang, der mit je einem zweiten Eingang der Frequenzmischer (7, 9) gekoppelt ist.

8. Sendeanordnung nach einem der Ansprüche 1 bis 7,
**dadurch gekennzeichnet, daß**
der Frequenzmischer (2) mit einem Steuereingang (42) ausgebildet ist zum Abschalten der Mischerfunktion des Frequenzmischers (2) in der zweiten Betriebsart.

9. Sendeanordnung nach einem der Ansprüche 5 bis 7 und Anspruch 8,
**dadurch gekennzeichnet, daß**
der Frequenzmischer (2) vier Differenzverstärker (20, 21, 22, 23) zur Signalmultiplikation umfaßt, welche je einen Speisestrompfad (24, 25, 26, 27) zur Stromversorgung der Differenzverstärker (20, 21, 22, 23) aufweisen, wobei im Speisestrompfad von drei der vier Differenzverstärker (21, 22, 23) eine Einrichtung zur Speisestromunterbrechung (39, 40, 41) während der zweiten Betriebsart vorgesehen ist.

10. Sendeanordnung nach Anspruch 9,
**dadurch gekennzeichnet, daß**
die Speisestrompfade (25, 26, 27) der drei abschaltbaren Differenzverstärker je einen abschaltbaren Stromspiegel (29, 30, 31) umfassen.

11. Sendeanordnung nach einem der Ansprüche 1 bis 10,
**dadurch gekennzeichnet, daß**
der Frequenzmischer (2) in CMOS-Schaltungstechnik aufgebaut ist.

## Claims

1. Transmission system, comprising
- a baseband signal processing unit (1), which provides a modulation signal at its output,
- a frequency mixer (2), designed for operation in two operating modes,
- a frequency generator (3), which is coupled to a first input of the frequency mixer (2) for controlling the same,
- a first transmission signal path (4,5), which couples the output of the baseband signal processing unit (1) to a second input of the frequency mixer (2), wherein the frequency mixer (2) in the first operating mode functions as a step-up frequency converter, and
- a second transmission signal path (6), which couples the output of the baseband signal processing unit (1) to the frequency generator (3), wherein the frequency mixer (2) in the second operating mode functions as an amplifier.

2. Transmission system according to claim 1, **characterized in that** the frequency generator (3) is arranged in a phase locked loop (3, 14, 15, 17) which comprises a control input which is coupled to the output of the baseband signal processing unit (1).

3. Transmission system according to claim 2, **characterized in that** a modulator (14), which comprises the control input of the phase locked loop, is arranged in a feedback path of the phase locked loop (3, 14, 15, 17), for modulating the feeding back output signal of the frequency generator (3) with the modulation signal.

4. Transmission system according to claim 3, **characterized in that** the modulator (14) is designed as a delta sigma modulator.

5. Transmission system according to any one of claims 1 to 4, **characterized in that** the frequency mixer (2) is designed as a quadrature modulator comprising a first frequency mixer (7) and a second frequency mixer (9), each having a first and a second input, wherein the first inputs of the frequency mixers (7, 9) are coupled to the frequency generator (3) and the second inputs of the frequency mixers (7, 9) are coupled to the baseband signal processing unit (1), for processing the modulation signal being present as a complex-valued signal (I, Q).

6. Transmission system according to claim 5, **characterized in that**, for coupling the frequency generator (3) to the first inputs of the both frequency mixers (7, 9), a frequency divider (8) is provided.

7. Transmission system according to claim 5 or 6, **characterized in that** in the first signal path (4, 5), for processing of the complex-valued signal (I, Q), respective digital-/analog-converters (11) are provided, each having an output that is coupled to a respective second input of the frequency mixers (7, 9).

8. Transmission system according to any one of claims 1 to 7, **characterized in that** the frequency mixer (2) is designed with a control input (42) for switching off the mixer function of the frequency mixer (2) in the second operating mode.

9. Transmission system according to any one of claims 5 to 7 and claim 8, **characterized in that** the frequency mixer (2) comprises four differential amplifiers (20, 21, 22, 23) for signal multiplication, which each comprises a supply current path (24, 25, 26, 27) for power supply of the differential amplifiers (20, 21, 22, 23), wherein in the supply current path of three of the four differential amplifiers (21, 22, 23) a device for supply current interruption (39, 40, 41) during the second operating mode is provided.

10. Transmission system according to claim 9, **characterized in that** the supply current paths (25, 26, 27) of the three differential amplifiers which can be switched off each comprises a current mirror (29, 30, 31) which can be switched off.

11. Transmission system according to any one of claims 1 to 10, **characterized in that** the frequency mixer (2) is realized in CMOS circuit technology.

## Revendications

1. Dispositif d'émission comprenant
- une unité (1) de traitement du signal en bande de base qui procure un signal de modulation sur sa sortie,
- un mélangeur (2) de fréquence conçu pour fonctionner dans deux types de fonctionnement,
- un générateur (3) de fréquence qui est couplé à une première entrée du mélangeur (2) de fréquence pour le commander,
- un premier trajet (4, 5) de signal d'émission qui couple la sortie de l'unité (1) de traitement de signal en bande de base à une deuxième entrée du mélangeur (2) de fréquence, le mélangeur (2) de fréquence fonctionnant dans le premier type de fonctionnement comme élévateur de fréquence, et
- un deuxième trajet (6) du signal d'émission, qui couple la sortie de l'unité (1) de traitement du signal en bande de base au générateur (3) de fréquence, le mélangeur (2) de fréquence fonctionnant comme amplificateur dans le deuxième type de fonctionnement.

2. Dispositif d'émission suivant la revendication 1, **caractérisé en ce que**
le générateur (3) de fréquence est disposé dans une boucle (3, 14, 15, 17) de régulation de phase, qui a une entrée de commande qui est couplée à la sortie de l'unité (1) du traitement du signal en bande de base.

3. Dispositif d'émission suivant la revendication 2,
**caractérisé en ce que** dans un trajet de réaction de la boucle (3, 14, 15, 17) de régulation de phase est monté un modulateur (14), qui a l'entrée de commande de la boucle de régulation de phase, pour moduler le signal de sortie de réaction du générateur (3) de fréquence par le signal de modulation.

4. Dispositif d'émission suivant la revendication 3, **caractérisé en ce que** le modulateur (14) est constitué en modulateur delta sigma.

5. Dispositif d'émission suivant l'une des revendications 1 à 4, **caractérisé en ce que** le mélangeur (2) de fréquence est constitué en modulateur en quadrature, comprenant un premier mélangeur (7) de fréquence et un deuxième mélangeur (9) de fréquence ayant respectivement une première et une deuxième entrées, les premières entrées des mélangeurs (7, 9) de fréquence étant couplées au générateur (3) de fréquence et les deuxièmes entrées des mélangeurs de fréquence à l'unité (1) de traitement du signal en bande de base pour le traitement du signal de modulation se présentant sous la forme d'un signal (I, Q) complexe.

6. Dispositif d'émission suivant la revendication 5, **caractérisé en ce qu'**il est prévu un diviseur (8) de fréquence pour le couplage du générateur (3) de fréquence aux premières entrées des deux mélangeurs (7, 9) de fréquence.

7. Dispositif d'émission suivant la revendication 5 ou 6, **caractérisé en ce que** dans le premier trajet (4, 5) du signal est prévu, pour le traitement du signal (I, Q) de modulation complexe, respectivement un convertisseur (11) numérique/analogique ayant respectivement une sortie qui est couplée respectivement à une deuxième entrée des mélangeurs (7, 9) de fréquence.

8. Dispositif d'émission suivant l'une des revendications 1 à 7, **caractérisé en ce que** le mélangeur (2) de fréquence est constitué en ayant une entrée (42) de commande pour mettre fin à la fonction de mélangeur du mélangeur (2) de fréquence dans le deuxième type de fonctionnement.

9. Dispositif d'émission suivant l'une des revendications 5 à 7 et 8, **caractérisé en ce que** le mélangeur (2) de fréquence comprend quatre amplificateurs (20, 21, 22, 23) différentiels pour la multiplication du signal, ayant respectivement un trajet (24, 25, 26, 27) de courant d'alimentation pour l'alimentation en courant des trois amplificateurs (20, 21, 22, 23) différentiels, dans lequel il est prévu, dans le trajet du courant de l'alimentation de trois des quatre amplificateurs ( 21, 22, 23) différentiels, un dispositif d'interruption (39, 40, 41) du courant d'alimentation pendant le deuxième type de fonctionnement.

10. Dispositif d'émission suivant la revendication 9, **caractérisé en ce** les trajets (25, 26, 27) de courant d'alimentation des trois amplificateurs différentiels qui peuvent être mis hors circuit comprennent respectivement des miroirs de courant (29, 30, 31) qui peuvent être mis hors circuit.

11. Dispositif d'émission suivant l'une des revendications 1 à 10, **caractérisé en ce que** le mélangeur (2) de fréquence est constitué en technique de circuit CMOS.
